# EUROPÄISCHE PATENTANMELDUNG

(11) **EP 1 959 391 A1**
(43) Veröffentlichungstag der Anmeldung: **20.08.2008**
(21) Anmeldenummer: 07002993.9
(22) Anmeldetag: 13.02.2007
(51) Int. Cl.: G06T 7/00, A61B 6/02

(54) **Bestimmung des dreidimensionalen Verlaufs des Randes einer anatomischen Struktur**

(71) Anmelder: BrainLAB AG, 85622 Feldkirchen (DE)
(72) Erfinder: Fleig, Oliver, 85598 Baldham (DE); Wegner, Melanie, 85614 Kirchseeon (DE); Hook, Ingmar, 85622 Feldkirchen (DE); Dohmen, Lars, 81549 München (DE)
(74) Vertreter: Schwabe - Sandmair - Marx

(57) **Zusammenfassung**

Die vorliegende Anmeldung betrifft ein Verfahren zum Bestimmen des dreidimensionalen Verlaufs eines Randes einer anatomischen Struktur, mit folgenden Schritten: mindestens zwei zweidimensionale Abbildungen des Randes werden bereitgestellt, wobei die Abbildungen unterschiedliche Ansichten des Randes aus unterschiedlichen Richtungen darstellen und somit unter sich ändernden Abbildungsbedingungen erfolgten; in den mindestens zwei Abbildungen wird jeweils ein zweidimensionaler Verlauf des Rands bestimmt; basierend auf den Abbildungen und Änderungs-Information über die sich ändernden Abbildungsbedingungen wird ein Modell eines dreidimensionalen Verlaufs des Randes berechnet.

## Beschreibung

Die vorliegende Erfindung betrifft Verfahren und Vorrichtungen zum Bestimmen des dreidimensionalen Verlaufs des Randes einer anatomischen Struktur sowie ein Programm, das das Verfahren umsetzt und ein Navigationssystem, das die Vorrichtung enthält. Die vorliegende Erfindung kann auf dem Gebiet der Medizin, insbesondere der bildgeführten Chirurgie ("image guided surgery"; IGS) und der Planung medizinischer Eingriffe eingesetzt werden. Es hilft insbesondere bei der Implantation von Implantaten, insbesondere künstlichen Gelenken, um die Implantation zu planen und eine möglichst genaue Positionierung des Implantats zu ermöglichen.

Bei der Implantation von künstlichen Hüftgelenken versucht man sich häufig an der Anteversion der Hüfte zu orientieren, um ein künstliches Hüftgelenk an einer geeigneten Lage zu implantieren. Jedoch ist eine Detektion der Anteversion mittels Röntgenbildern schwierig.

Aufgabe der Erfindung ist es Verfahren, Vorrichtungen, Systeme und entsprechende Programme bereitzustellen, die bei einer Implantation genutzt werden können oder hierzu nützliche Informationen liefern.

Vorstehende Aufgabe wird durch die Gegenstände der unabhängigen Ansprüche gelöst. Vorteilhafte Ausführungen gehen aus den abhängigen Ansprüchen hervor. Die Erfinder haben festgestellt, dass sich der Rand einer anatomischen Struktur gut eignet, um als Orientierungshilfe für eine Implantation eines Implantats, insbesondere künstlichen Hüftgelenks zu dienen. Dabei befindet sich der Rand der anatomischen Struktur insbesondere in der Nähe des Zielgebiets des Implantats und/oder ist nach Implantation in Kontakt mit dem Implantat und/oder umgibt zumindest einen Teil des Implantats nach der gelungenen Implantation. Beispiele für den Rand einer anatomischen Struktur stellen der Rand des Acetabulums (Hüftgelenkspfanne) oder der Rand der Patella (Kniescheibe) dar.

Zur Bestimmung des dreidimensionalen Verlaufs des Randes der anatomischen Struktur werden vorzugsweise mehrere Schritte durchgeführt. Das erfindungsgemäße Verfahren nutzt zweidimensionale Abbildungen, die den Rand der anatomischen Struktur darstellen. Diese Abbildungen stellen vorzugsweise unterschiedliche Ansichten der Ränder aus unterschiedlichen Richtungen (Abbildungs-Richtungen) dar, so dass das erfindungsgemäße Verfahren aus zwei oder mehr derartiger Abbildungen räumliche Informationen über die anatomische Struktur, insbesondere ein dreidimensionales Modell, insbesondere ein dreidimensionales Modell des Randes der anatomischen Struktur bestimmen kann. Vorzugsweise wird hierzu in jeder der zur Gewinnung der räumlichen Information genutzten Abbildungen der zweidimensionale Verlauf des Randes bestimmt.

Handelt es sich bei den Abbildungen beispielsweise um Röntgenbilder, so sind die Ränder einer anatomischen Struktur beispielsweise an einem Konturverlauf zu erkennen. Abgesehen von Röntgenaufnahmen können auch andere bildgebende Verfahren, die projektive Bilder erzeugen, erfindungsgemäß eingesetzt werden.

Ein Erkennungs- und Bestimmungsverfahren zum Erkennen und Bestimmen des zweidimensionalen Verlaufs einer anatomischen Struktur in den zweidimensionalen Abbildungen kann Eingaben eines Bedieners fordern oder auch selbständig und automatisch von einer Datenverarbeitungseinrichtung (z.B. Computer) durchgeführt werden. Beispielsweise kann ein Bediener (z.B. Arzt) an einem Bildschirm, der eine zweidimensionale Abbildung des Randes zeigt, den Verlauf des Randes beispielsweise mit einer Maus nachfahren, um so den Randverlauf zu bestimmen und für die weitere Verarbeitung festzulegen. Außerdem hat jeder Rand einer anatomischen Struktur eine typische Form. Basierend auf der Form und der Konturlinie lassen sich somit beispielsweise durch Mustererkennungsverfahren und/oder einer Kontrastverschärfung automatisch der zweidimensionale Verlauf einer anatomischen Struktur in einer zweidimensionalen Abbildung erkennen und somit bestimmen.

Da, wie bereits oben ausgeführt wurde, die mindestens zwei zweidimensionalen Abbildungen aus unterschiedlichen Richtungen erfolgt sind, unterscheidet sich die Form der Linie, die in der jeweiligen zweidimensionalen Abbildung den Verlauf des Randes darstellt. Vorzugsweise wird dem erfindungsgemäßen Verfahren Information über die sich von Abbildung zu Abbildung ändernden Abbildungsbedingungen (relativen Abbildungsbedingungen) zugeführt oder die Information wird, wie später ausgeführt wird, im Rahmen des erfindungsgemäßen Verfahrens ermittelt. Die Information wird hierin auch als "Änderungs-Information" bezeichnet. Basierend auf den bekannten relativen Abbildungsbedingungen und dem für jede Abbildung bestimmten zweidimensionalen Verlauf des Randes wird erfindungsgemäß ein dreidimensionaler Verlauf des Randes berechnet, der somit ein dreidimensionales Modell des Randes der anatomischen Struktur darstellt. Die relativen Abbildungsbedingungen umfassen insbesondere Information über die sich relativ von Abbildung zu Abbildung ändernde Abbildungsgeometrie (geometrische Beziehung zwischen Objekt und Bild), insbesondere die sich von Abbildung zu Abbildung voneinander unterscheidenden Abbildungsrichtungen und/oder die sich von Abbildung zu Abbildung unterscheidende relative Lage zwischen anatomischer Struktur und dem Abbildungsgerät, insbesondere der Bildebene des Abbildungsgeräts. Die Änderungs-Information wird insbesondere durch Matritzen, wie sie in der Epipolargeometrie verwendet werden, wie die essentielle Matrix und/oder die fundamentale Matrix und/oder die Lokalisierungsmatrix, die insbesondere die relative geometrische Beziehung zwischen den Abbildungen zugrunde liegenden Bedingungen beschreiben, z.B. relative Lage der Fokuspunkte oder Projektionspunkte der Abbildungen und/oder relative Lage der Bildebenen, beschrieben. Hierbei wird das Prinzip der Epipolargeometrie eingesetzt. Sie stellt eine intrinsische projektive Geometrie zwischen zwei Ansichten (Abbildungsrichtungen) dar und hängt nur von den internen Parametern der Abbildungsgeräte und ihrer relativen Lage ab. Die fundamentale Matrix repräsentiert diese intrinsische Geometrie. Die essentielle Matrix stellt einen Spezialfall der fundamentalen Matrix dar.

Durch die essentielle Matrix lässt sich die Lokalisierungsmatrix bestimmen. Dabei wird insbesondere das Prinzip der Epipolargeometrie eingesetzt.

Das Prinzip der Lokalisierungsmatrix wird beispielsweise in dem Artikel "3D Simultaneous Localization and Modeling from Stereo Vision" von Miguel Angel Garcia und Agusti Solanas beschrieben (siehe www.etse.urv.es/recerca/rivi/pub/3d/icra04a.pdf).

Aus der Lokalisierungsmatrix lassen sich dann gemäß dem Prinzip der Epipolargeometrie sogenannte Epipolarlinien bestimmen. Die Punkte, die entlang einer Epipolarlinie liegen, stellen Kandidaten für so genannte Korrespondenzpunkte dar. Korrespondenzpunkte stellen denselben Objektpunkt in verschiedenen Abbildungen dar. Ein Korrespondenzpunkt in einer Abbildung legt eine Epipolarlinie in der anderen Abbildung fest, auf der sich der zu ihm korrespondierende Korrespondenzpunkt befindet.

Vorzugsweise werden die Korrespondenzpunkte, die auch als homologe Punkte bezeichnet werden, in den zweidimensionalen Abbildungen bestimmt. D.h., korrespondierende Punkte stellen in verschiedenen Abbildungen denselben Punkt (oder Bereich) der anatomischen Struktur, also denselben Objektpunkt dar. Jeder Korrespondenzpunkt in einer Abbildung hat einen zu ihm korrespondierenden Korrespondenzpunkt in einer anderen Abbildung. Das Prinzip der Korrespondenzpunkte ist allgemein aus dem Prinzip der Stereovision und Epipolargeometrie bekannt. Insbesondere wird auf die Patentanmeldung EP 1 693 798 sowie auf das Buch "Epipolar Geometry in Stereo, Motion and Object Recognition: A Unified Approach" von Gang Xu, Zhengyou Zhang hingewiesen, in denen das Prinzip der Epipolargeometrie erläutert wird.

Erfindungemäß wird vorzugsweise ein Korrespondenzpunkt basierend auf dem Schnittpunkt einer aus der Lokalisierungsmatrix bestimmten Epipolarlinie mit dem zweidimensionalen Verlauf des Randes in einer der Abbildungen bestimmt.

Kandidaten für mögliche Korrespondenzpunkte sind somit nicht mehr alle Punkte entlang der Epipolarlinie sondern nur noch die Schnittpunkte zwischen dem zweidimensionalen Verlauf des Randes und einer Epipolarlinie in einer Abbildungen, wobei die Epipolarlinie durch einen korrespondierenden Punkt in der anderen zweidimensionalen Abbildung festgelegt ist. Da der Randverlauf üblicherweise eine geschlossene Kurve darstellt, gibt es üblicherweise zwei Schnittpunkte, die jeweils mögliche Kandidaten für einen Korrespondenzpunkt darstellen. Ist der Randverlauf unstetig oder nicht ideal (konvex) gekrümmt, so kann es auch mehr als zwei Schnittpunkte geben. Somit wurde durch das erfindungsgemäße Prinzip der Bestimmung des zweidimensionalen Verlaufs des Randes bereits die Anzahl der möglichen Kandidaten erheblich, d.h. möglichst auf zwei eingeschränkt. Um eine Auswahl zwischen den (beiden) Kandidaten zu treffen, kann beispielsweise der Bediener gefragt werden oder es kann ein möglichst markanter Punkt des Randverlaufs genutzt werden, der beispielsweise bei einem Extrempunkt des Verlaufs vorhanden ist, also beispielsweise der am weitesten links oder rechts bzw. oben oder unten gelegene Punkt. Derjenige Punkt aus den zwei Kandidaten kann darauf basierend ausgewählt werden, der einem entsprechenden Extrempunkt in der anderen Abbildung am nächsten liegt. Ist einmal für einen Punkt einer Abbildung der entsprechende Korrespondenzpunkt in der anderen Abbildung gefunden, so kann hierauf basierend insbesondere automatisch die Bestimmung der weiteren Korrespondenzpunkte entlang des Randverlaufs erfolgen.

Dabei wird die Nachbarschaftsbeziehung zwischen den Punkten ausgenutzt. Es wird also ein weiterer Punkt ausgewählt, der dem ersten bereits identifizierten Korrespondenzpunkt benachbart ist. Zwischen den für diesen weiteren Punkt ebenfalls sich ergebenden (üblicherweise zwei) Kandidatenpunkten wird dann derjenige ausgewählt, der bereits dem ersten erkannten Korrespondenzpunkt am nächsten ist, also ebenfalls benachbart ist. Auf diese Art und Weise kann man sich Punkt für Punkt entlang der Linie insbesondere automatisch voranarbeiten, um so automatisch die Korrespondenzpunkte entlang des Randverlaufs zu bestimmen. Die in den verschiedenen Abbildungen miteinander korrespondierenden Punkte (Korrespondenzpunkte) stellen jeweils einen Objektpunkt dar. Bei zwei Abbildungen stellt demnach ein Paar von Korrespondenzpunkten einen Objektpunkt dar. Aus der Position der Korrespondenzpunkte (zum Beispiel eines Korrespondenzpunktpaares) in den Abbildungen wird vorzugsweise die dreidimensionale Lage des den Korrespondenzpunkten zugeordneten Objektpunktes berechnet. Hierzu werden die Prinzipien der Epipolargeomatrie eingesetzt, insbesondere wird die essentielle Matrix oder Lokalisierungsmatrix verwendet. Die bestimmten Objektpunkte werden dann beispielsweise mit einer Fitfunktion (zum Beispiel Spline-Kurve) verbunden, um den dreidimensionalen Verlauf der Ränder zu bestimmen.

Die durch die Abbildung erfasste anatomische Struktur kann anatomische Landmarken enthalten und darstellen. Vorzugsweise wird die dreidimensionale Lage zumindest einer der Landmarken bestimmt. Beispiele für Landmarken bei einer Hüftgelenkendoprothese sind die linke und rechte Spina Anterior Superior, Punke am Schambein und das Drehzentrum des rechten und linken Femurs. Die Bestimmung der dreidimensionalen Lage der Landmarken kann insbesondere basierend auf den mindestens zwei Abbildungen durchgeführt werden, wobei insbesondere basierend auf dem Prinzip der Epipolargeometrie diese dreidimensionale Lage bestimmt wird. Die Lage der Landmarken wird insbesondere relativ zum Randverlauf (relativ zum Modell des Randes) bestimmt bzw. insbesondere in einem Bezugssystem (z.B. eines Navigationssystems für IGS) bestimmt, in dem der Verlauf des Randes bekannt ist. Die Landmarken sind insbesondere Punkte auf dem Rand oder in dessen Nähe. Die gewünschte Lage des Implantats kann durch ein Planungsprogramm relativ zu diesen Landmarken geplant werden. Die Bestimmung der Lage der Landmarken relativ zum Rand erlaubt es zum Beispiel auch während eines realen Implantationsvorganges die reale Lage des Randes zu bestimmen. Dazu können z.B. mittels Pointer (Zeigegeräte mit daran angebrachten Markereinrichtungen) die Landmarken am Patienten vom Arzt abgetastet werden. Ist die Lage der Landmarken beispielsweise in ein Navigationssystem oder ein Navigationsprogramm eingelesen, so kann dann basierend auf der bekannten (aus den Abbildungen bestimmten) relativen Lage zwischen den Landmarken und dem Rand die Lage des Randes im Bezugssystem des Navigationssystems bestimmt werden, um so dem Arzt leitende Hinweise geben zu können oder eine Implantation zu planen. Da relativ zur Lage des Randes eine gewünschte Lage des Implantats bestimmt wurde, kann auch basierend auf den abgetasteten Landmarken die Solllage des Implantats bestimmt werden. Die so bestimmte Solllage kann genutzt werden, um z.B. mittels eines Navigationssystems dem Operateur beim Implantationsvorgang zu führen, leitende Hinweise zu geben oder eine Implantation zu planen.

Um die Änderungs-Information zu bestimmen, werden vorzugsweise Markereinrichtungen oder Marker in einer relativen Lage zu der anatomischen Struktur gebracht, die für die mindestens zwei Abbildungen gleich bleibt, wobei die Marker so gestaltet sind, dass sie durch den Abbildungsvorgang erfasst werden. Handelt es sich beispielsweise um Röntgenabbildungen, so können die Marker beispielsweise Metallkugeln (aus einem Metall mit hoher Kernladungszahl, bevorzugt größer 20, zum Beispiel aus Wolfram) sein, die durch eine Röntgenabbildung detektiert werden können. Die Marker oder Markereinrichtungen können beispielsweise an der anatomischen Struktur angebracht werden, auf die Haut des Patienten geklebt werden oder am Körper des Patienten beispielsweise festgeschnallt werden oder Teil eines Rahmens sein, in den der Patient eingespannt wird. Der Körper des Patienten verbleibt dann beispielsweise unbeweglich, während die mindestens zwei Aufnahmen (aus verschiedenen Abbildungsrichtungen) getätigt werden oder dreht sich bevorzugt nur um eine Achse, während das Abbildungsgerät ortsfest bleibt. Die Marker haben vorzugsweise eine vorbekannte Lage zueinander und sind von unterschiedlicher Ausgestaltung, z.B. hinsichtlich der Form und/oder Größe, so dass sie in den jeweiligen Abbildungen identifiziert werden können. Somit können Korrespondenzpunkte, die den identifizierten Markern entsprechen, auf einfache Weise festgelegt werden. Basierend auf den Korrespondenzpunkten und den Prinzipien der Epipolargeometrie kann dann die essentielle Matrix und/oder eine Lokalisierungsmatrix berechnet werden, die dann in die beschriebene Berechnung des dreidimensionalen Verlaufs des Randes einfließt.

Vorzugsweise erfolgt eine Kalibrierung des Modells insbesondere hinsichtlich der Abstände. Dies kann beispielsweise basierend auf den bekannten Abständen zwischen Markern bestimmt werden.

Die Änderungs-Information kann alternativ oder zusätzlich auch wie folgt bestimmt werden. Es kann beispielsweise die relative Lage und/oder Orientierung der Abbildungsgeräte zueinander von Abbildung zu Abbildung geändert werden und gemessen werden, während z.B. der Patient ortsfest verbleibt. Beispielsweise kann hierzu eine Markereinrichtung an einem Abbildungsgerät angebracht werden, deren relative Lage zu der Abbildungsebene und/oder zum Projektionspunkt oder Fokuspunkt des Abbildungsgeräts bekannt ist. Die Lage dieser Markereinrichtung und basierend hierauf die Lage der Abbildungsebene und/oder des Projektionspunktes bzw. Fokuspunktes wird durch ein Navigationssystem oder durch eine geeignete Detektionseinrichtung mit angeschlossenem Computer bestimmt. Auf diese Art und Weise kann Änderungs-Information, insbesondere die Lokalisierungsmatrix für die mindestens zwei Abbildungen bestimmt werden.

Das erfindungsgemäße Verfahren zum Bestimmen des dreidimensionalen Verlaufs eines Randes kann, wie bereits oben erwähnt, beim Planen einer Implantation eines Implantats hilfreich sein. Hierzu wird vorzugsweise ein dreidimensionales Modell eines Implantats bereitgestellt. Vorzugsweise wird die relative Lage des Implantat-Modells relativ zum Rand-Modell in einem Simulationsverfahren veränderbar gestaltet. Vorzugsweise wird die Lage des Implantat-Modells und des Rand-Modells in einem Bezugssystem bestimmt und insbesondere auf einer Anzeigeeinrichtung dargestellt. Dadurch, dass die relative Lage des Implantat-Modells relativ zum Rand-Modell veränderbar ist, lässt sich eine geeignete relative Lage insbesondere von einem Bediener (z.B. Arzt) bestimmen. Das Implantat-Modell kann also bestmöglich an die Lage des Rand-Modells angepasst werden.

Gemäß einer weiteren Ausführungsform werden Kriterien bereitgestellt, anhand derer eine relative Lage zwischen dem Rand-Modell und dem Implantat-Modell bestimmt wird, die als für die Implantation geeignet angesehen wird oder als ein Ausgangspunkt für eine weitere Verfeinerung der Lage (insbesondere durch den Arzt) dienen kann. Derartige Kriterien können beispielsweise ein gewünschter Abstand und/oder eine Ausrichtung einer Implantatachse oder Implantatsymmetrieebene relativ zum Rand-Modell sein. Beispielsweise kann eine Ebene durch das Rand-Modell hindurchgelegt werden, wobei die Orientierung einer Symmetrieachse des Implantat-Modells relativ zu dieser Ebene als für die Implantation vermutlich geeignet vorgegeben ist.

Gemäß einer Ausführungsform der Erfindung wird ein Verfahren bereitgestellt, um eine Implantation zu unterstützen. Diese Unterstützung des Implantationsvorganges erfolgt insbesondere basierend auf dem (bereits vorab bestimmten) Rand-Modell. Vorzugsweise werden Punkte des Randes und/oder die zuvor erwähnten Landmarken in das erfindungsgemäße Verfahren eingegeben. Die so eingegebenen Daten stellen Registrierungs-Daten dar, die in einem Bezugssystem eines Navigationssystems verwendet werden können. Das (bereits vorab bestimmte) Rand-Modell kann somit basierend auf den Registrierungs-Daten im Bezugssystem des Navigationssystems registriert werden. Wurde beispielsweise mittels des zuvor erwähnten Verfahrens zum Planen einer Implantation eine Soll-Lage des Implantat-Modells relativ zum Rand-Modell festgestellt, so kann diese Soll-Lage in das Implantationsunterstützungsverfahren eingegeben werden. Basierend auf dieser Soll-Lage des Implantat-Modells relativ zum Rand-Modell und basierend auf dem registrierten Rand-Modell kann dann die Soll-Lage des realen Implantats im Bezugssystem des Navigationssystems berechnet werden. Um nun den Operateur bei der Platzierung des Implantats zu unterstützen, werden vorzugsweise Implantat-Daten erfasst, die die Lage des Implantats im Bezugssystem des Navigationssystems darstellen. Beispielsweise kann hierzu eine Markereinrichtung am Implantat angebracht sein, die mit einer Detektionseinrichtung des Navigationssystems detektiert wird. Somit kann die reale Lage des Implantats im Bezugssystem gemessen werden und mit der berechneten Soll-Lage des Implantats verglichen werden. Insbesondere kann an einem Bildschirm die Soll-Lage des Implantats und die reale Lage des Implantats angezeigt werden, um somit einem Operateur eine Navigationshilfe zu geben. Alternativ können Hinweise über gegebene Abstände oder Abweichungen zwischen der realen Lage des Implantats und der Soll-Lage gegeben werden oder beispielsweise Anweisungen, in welche Richtung das reale Implantat zu kippen oder zu bewegen ist.

Die vorliegende Erfindung betrifft auch ein Programm, das das Verfahren ausführt, wenn es auf einem Computer läuft oder in einen Computer geladen wird. Die Erfindung betrifft auch eine Signalwelle, die Informationen trägt, die das Programm darstellen oder ein Computerspeichermedium, auf denen das Programm geladen ist.

Die vorliegende Erfindung betrifft weiter eine Vorrichtung, die einen Computer oder eine Datenverarbeitungseinrichtung sowie ein Programm umfasst, das in dem Computer oder der Datenverarbeitungseinrichtung gespeichert ist und/oder darauf läuft. Bei dem Programm handelt es sich um das zuvor erwähnte Programm. Weiter ist eine Detektionseinrichtung vorgesehen, um Markereinrichtungen und/oder Pointer zu detektieren. Die Markereinrichtungen sind beispielsweise am Implantat, einer anatomischen Struktur, am Patienten oder an einem Abbildungsgerät angebracht oder ein Pointer greift die Lage des Implantats, der anatomischen Struktur, des Patienten oder des Abbildungsgeräts ab. Die somit von der Detektionseinrichtung detektierten Signale werden in die Datenverarbeitungseinrichtung bzw. den Computer eingegeben und durch das Programm verarbeitet. Die Signale stellen die Lage des Implantats, der anatomischen Struktur, des Patienten oder des Abbildungsgeräts dar. Wird die Lage des Abbildungsgerätes zwischen den zwei Abbildungen geändert während der Patient insbesondere seine Lage nicht ändert, so kann aus den detektierten Signalen die Änderungs-Information, insbesondere die Lokalisierungsmatrix bestimmt werden. Die vorgenannte Vorrichtung kann insbesondere zum Bestimmen eines dreidimensionalen Verlaufs eines Randes einer anatomischen Struktur und/oder zum Planen einer Implantation eines Implantats verwendet werden.

Die Erfindung betrifft weiter ein Navigationssystem zum Navigieren eines Implantats oder eines Instruments relativ zu einer anatomischen Struktur. Dazu umfasst das Navigationssystem vorzugsweise die vorgenannte Vorrichtung sowie eine Anzeigeeinrichtung. Das Programm, das auf dem Computer bzw. der Datenverarbeitungseinrichtung läuft bzw. darauf gespeichert ist, erlaubt die Bestimmung der Lage des Randes der anatomischen Struktur entsprechend dem zuvor erwähnten Verfahren. Die so bestimmte Lage des Randes und die mit der Detektionseinrichtung detektierte Lage des Implantats wird mit einer Anzeigeeinrichtung dargestellt, um einem Operateur bzw. Arzt bei Bedarf leitende Hinweise geben zu können.
Figur 1a und 1b zeigen zwei Röntgenaufnahmen aus verschiedenen Richtungen;
Figur 2 zeigt einen Ausschnitt aus einer der beiden Röntgenaufnahmen (AP) mit eingezeichnetem Verlauf des Randes;
Figur 3 zeigt die andere der beiden Röntgenaufnahmen (schräge Richtung) mit eingezeichnetem Randverlauf;
Figur 4 zeigt eine Röntgenaufnahme (schräge Richtung) mit dreidimensionalem eingeblendetem Implantat;
Figur 5 zeigt eine beispielhafte Anordnung von Markerelementen einer formveränderlichen Markereinrichtung;
Figur 6 zeigt schematisch eine Vorrichtung und ein Navigationssystem gemäß der vorliegenden Erfindung;
Figuren 7 und 8 sind Abbildungen eines Beckenmodells zur Veranschaulichung eines anatomischen Randes.

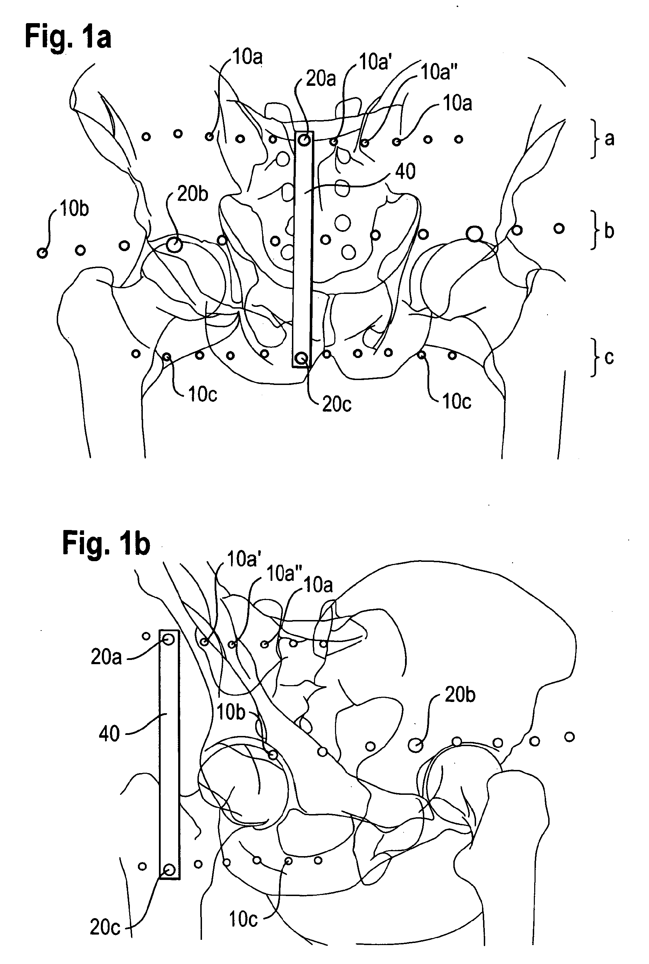

Figur 1a zeigt eine Röntgenaufnahme aus der Richtung Anterior posterior (im Folgenden kurz als AP-Richtung bezeichnet). In Fig. 1b ist eine Röntgenaufnahme aus einer schrägen Richtung gezeigt. Beide stellen dasselbe menschliche Becken aus unterschiedlichen Richtungen dar. Außerdem sind in jeder Aufnahme Kreisflächen 10 und 20 jeweils in einer Linie a, b oder c angeordnet zu sehen. Diese Linien werden im Folgenden als "Kreislinien" bezeichnet. Der Durchmesser der Kreisflächen ist innerhalb der jeweiligen Kreislinie gleich bis auf die Kreisflächen 20, die größer als die anderen Kreisflächen 10 sind. Die gezeigten Kreisflächen 10, 20 ergeben sich dadurch, dass Markerkugeln, die für Röntgenstrahlung nicht oder schwer durchlässig sind, um den Patienten herum, genauer um das Becken herum angeordnet werden. Die relative Lage der Markerkugeln zu dem Becken ist bei beiden Aufnahmen gleich. Weitere Details hierzu werden in der am gleichen Tag von der Anmelderin eingereichten Patentanmeldung mit dem Titel **"Formveränderlich Markeneinrichtung"** offenbart, die hiermit durch Bezugnahme in die Offenbarung aufgenommen wird und in der Anlage beigefügt ist. Im gezeigten Beispiel sind die obere und untere Reihe der Marker, die jeweils in der Abbildung die obere und untere Kreislinie a und b verursacht, vor dem Becken angeordnet, während die mittlere Reihe, die in den Abbildungen die mittlere Kreislinie verursacht, hinter dem Becken des Patienten angeordnet ist. Der Abstand zwischen den zwei großen Markerkugeln 20a und 20c auf der Vorderseite ist bekannt und wird durch einen Stab 40 fixiert. Vergleicht man die Röntgenaufnahme aus der AP-Richtung (Fig. 1a) mit der Aufnahme aus der schrägen Richtung (Fig. 1b), so kann man erkennen, dass die mittlere Kreislinie b im Vergleich zu der oberen a und unteren c Kreislinie verschoben aussieht. Dies liegt an dem anderen Blickwinkel. Aus der Verschiebung der Kreislinien gegeneinander, insbesondere der großen Kreisflächen 20 in der jeweiligen Reihe lässt sich die Änderungs-Information, insbesondere die Änderung der Abbildungsrichtung zwischen den beiden Abbildungen bestimmen. Da die großen Kreisflächen 20 leicht zu identifizieren sind, können leicht die Korrespondenzpunkte bestimmt werden. So korrespondiert die große Kreisfläche 20 in jeder Kreislinie der Abbildung der Fig. 1a mit der entsprechenden Kreisfläche 20 in der entsprechenden Kreislinie der Abbildung der Fig. 1b. Ausgehend von dieser großen Kreisfläche (z. B. 20a) kann man sich dann zur nächstliegenden kleinen Kreisfläche (z.B. 10a') vorarbeiten und von dieser wiederum zu einer zu dieser nächstliegenden kleinen Kreisfläche (10a") usw., um so nach und nach die entsprechenden Korrespondenzpunkte zu bestimmen, bis schließlich alle in beiden Abbildungen gezeigten Kreisflächen paarweise als Korrespondenzpunkte identifiziert wurden, wobei jedes Paar durch eine Markerkugel verursacht wird, die sich in ihrer Lage von den anderen Markerkugeln unterscheidet. Sind die Korrespondenzpunkte bestimmt, so kann hierauf basieren die Änderungs-Information und insbesondere die Lokalisierungsmatrix basierend auf den Prinzipien der Epipolargeometrie bestimmt werden. Aus bekannten Punkt-Korrespondenzen in einer Serie von zwei oder mehr Bildern kann die "essentielle Matrix" berechnet werden, die die Rotation zwischen den einzelnen Kamerapositionen und den Verschiebevektor des Kamerazentrums von einer zur nächsten Aufnahme enthält (einzige Unbekannte ist ein Skalierungsfaktor). In der Literatur existieren dazu verschiedene Ansätze: 8-Punkt-Algorithmus von Longuet-Higgins, Verbesserung von Hartley, 5-Punkt-Algorithmus von Stewenius/Engels/Nister, um nur einige zu nennen. Prinzipiell gibt es zwei Vorgehensweisen: Algorithmen, die den Rückprojektionsfehler über ein Optimierungsverfahren minimieren, und Algorithmen, die die Matrix direkt algebraisch berechnen.
* H. Christopher Longuet-Higgins (Sep 1981). "A computer algorithm for reconstructing a scene from two projections". Nature 293: 133-135.
* R. I. Hartley, In defence of the 8-point algorithm, 1995, Proceedings of the Fifth International Conference on Computer Vision table of contents
* H. Stewénius, C. Engels and D. Nistér, Recent Developments on Direct Relative Orientation, to appear in ISPRS Journal of Photogrammetry and Remote Sensing.

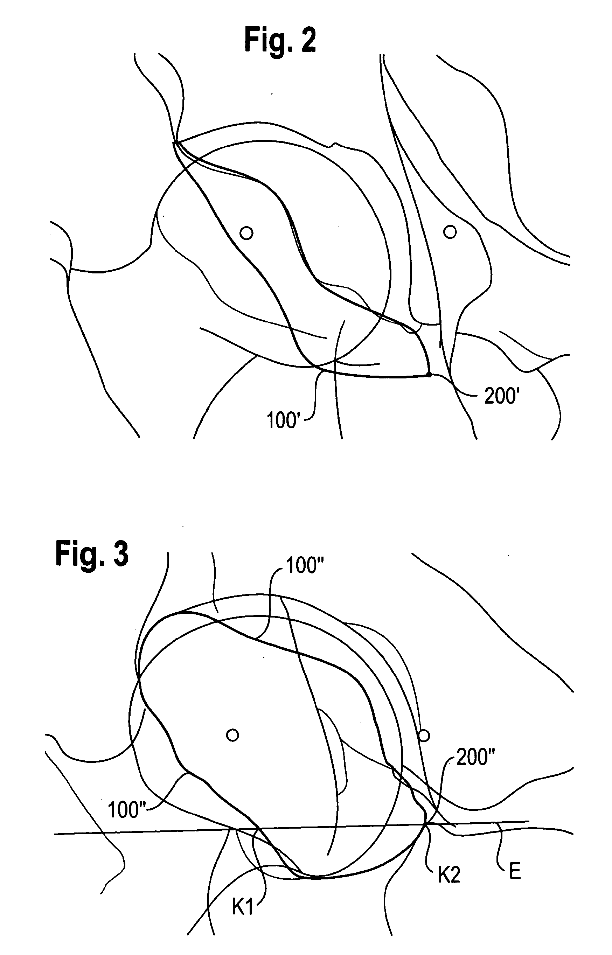

Figur 2 zeigt einen Ausschnitt aus einer in AP-Richtung erfolgten Abbildung. Der Rand des Acetabulums, der sich als eine Kontur im Röntgenbild abzeichnet, wurde per Hand nachgezeichnet. Die gezeigte, geschlossene Linie 100' stellt also den bestimmten, zweidimensionalen Verlauf des Randes in einer Abbildung dar. Die schwarzen Kreisflächen stellen Markenkugeln dar.

Figur 3 zeigt das entsprechende für die aus der schrägen Richtung erfolgte Abbildung. Auch dort ist eine geschlossene Linie 100" zu sehen, die per Hand eingezeichnet wurde und die dem Konturverlauf des Randes (Pfannenrandes) folgt. Die schwarzen Kreise wurden von Markenkugeln verursacht.

Vorzugsweise wird aus denselben Abbildungen sowohl die Änderungs-Information (wie oben an Hand von Fig. 1a und b erläutert) als auch jeweils der zweidimensionale Verlauf des Randes bestimmt (wie oben an Hand von Fig. 2 und 3) erläutert. Vorzugsweise würde also die Fig. 2 einen Ausschnitt aus der Fig. 1a darstellen und die Fig. 3 einen Ausschnitt aus Fig. 1b darstellen.

Basierend auf den beiden zweidimensionalen Verläufen des Randes (Figur 2 und Figur 3) können nun Korrespondenzpunkte entlang des Randes bestimmt werden. Hierzu beginnt man beispielsweise in Figur 2 mit dem am weitesten rechts gelegenen Punkt 200' der Linie. Diesem am weitesten rechts gelegenen Punkt 200' wird dann basierend auf der Lokalisierungsmatrix eine Epipolarlinie in der Abbildung der Figur 3 zugeordnet. Diese Epipolarlinie wird in Fig. 3 rein beispielhaft mit der Linie E veranschaulicht. Die Schnittpunkte dieser Epipolarlinie E mit dem zweidimensionalen Verlauf des Randes 100" in der Figur 3 sind dann mögliche Kandidaten K1 und K2 für einen Korrespondenzpunkt. Von diesen beispielsweise zwei möglichen Kandidaten K1 und K2 wird dann in Figur 3 der am weitesten rechts gelegene Punkt K2 ausgewählt und stellt dann den Korrespondenzpunkt 200" zu dem Punkt 200' in Figur 2 dar. Man hat somit ein Paar von Korrespondenzpunkten 200' und 200".

Ist das erste Paar von Korrespondenzpunkt festgelegt, so kann man sich schrittweise vorantasten, indem als nächstes in Figur 2 ein zum ersten Punkt benachbarter Punkt ausgewählt wird. In Figur 3 wird dann wiederum zu diesem eine Epipolarlinie bestimmt. Derjenige der mindestens zwei Schnittpunkte wird ausgewählt, der zu dem ersten Korrespondenzpunkt benachbart ist. Man hat somit ein weiteres Paar von Korrespondenzpunkten.

Der eben beschriebene Vorgang wird fortgeführt und wiederholt, bis eine Vielzahl von Paaren von Korrespondenzpunkten auf den beiden Verläufen des Randes festgelegt wurde. Nach den Prinzipien der Epipolargeometrie kann mittels der bestimmten Lokalisierungsmatrix jedem Paar von Korrespondenzpunkten ein Objektpunkt im dreidimensionalen Raum zugeordnet werden. Es kann also aus einem Paar von Korrespondenzpunkten die dreidimensionale Lage eines Punktes auf dem dreidimensionalen Verlauf des Randes bestimmt werden. Man erhält somit aus der Vielzahl von Paaren von Korrespondenzpunkten die dreidimensionale Lage von einer Vielzahl von Objektpunkten entlang des dreidimensionalen Verlaufs des Randes. Diese Objektpunkte kann man verbinden (beispielsweise mit Fit-Funktionen, insbesondere mit Spline-Funktionen), um einen kontinuierlichen dreidimensionalen Verlauf des Randes zu bestimmen, der ein dreidimensionales Rand-Modell darstellt.

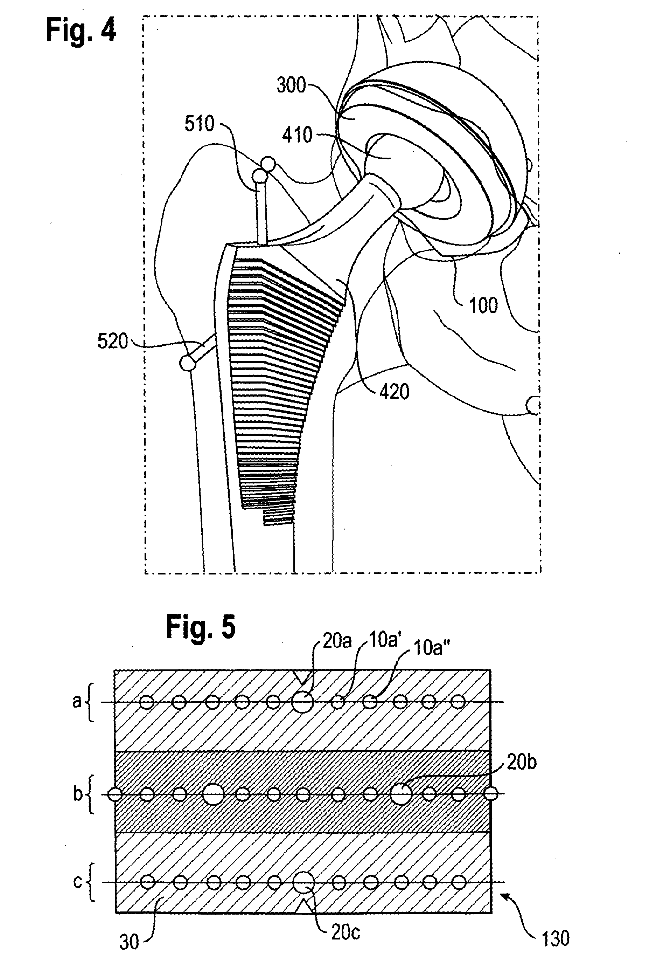

Figur 4 zeigt als Hindergrund die Röntgenaufnahme des Beckens aus schräger Richtung. Im Vordergrund ist der berechnete dreidimensionale Verlauf 100 des Pfannenrandes relativ zum Becken gezeigt. In diesem Verlauf ist ein künstliches Pfannengelenk 300 eingepasst. Weiter ist das künstliche Kopfgelenk 410 mit künstlichem Schaft 420 gezeigt. Die eingezeichneten Achsen 510 und 520 stellen die Schenkelhalsachse 520 und eine Achse 510 dar, die durch den Femur verläuft. Die Achsen stellen für den Operateur wichtige Orientierungen für eine geeignete Lage des Implantats dar. Die in Figur 4 gezeigte Abbildung stellt ein Beispiel für eine Anzeige dar, mittels derer ein Operateur die Implantation eines künstlichen Hüftgelenks planen kann. Die Lage des künstlichen Pfannengelenks 300, 410, 420 ist vorzugsweise mittels des Programms relativ zu der gezeigten Lage des Rand-Modells 100 veränderbar, bis eine Lage eingenommen wurde, die dem Arzt bzw. Operateur als passend erscheint. Dann kann relativ zu der Lage des Rand-Modells 100 das künstliche Pfannengelenk 300 das künstliche Kopfgelenk 410 und der künstliche Schaft 420 mittels der Planungssoftware platziert werden, wobei die vorgenannten eingezeichneten Achsen 510 und 520 dem planenden Arzt Hilfestellungen liefern.

Figur 5 zeigt die Anordnung von Markerelementen 10 und 20 entlang Linien a, b und c. Die Markerelemente sind als Markerkugeln ausgebildet und an einem Gewebe 30 angebracht. Die in Figur 5 gezeigte formveränderliche Markereinrichtung 130 soll die Gestalt einer Manschette oder eines Gürtels haben, wobei die Linien a und c vor dem Becken liegen sollen und die Linie b dahinter. Die hellgrau gezeichneten Streifen zeigen also eine formveränderliche Markereinrichtung von vorne und der dunkelgraue Streifen, in dem sich die Linie b befindet, von hinten.

Näheres ist in der parallel eingereichten Anmeldung desselben Anmelders mit dem Titel "Formveränderliche Markereinrichtung" ausgeführt (siehe Anhang).

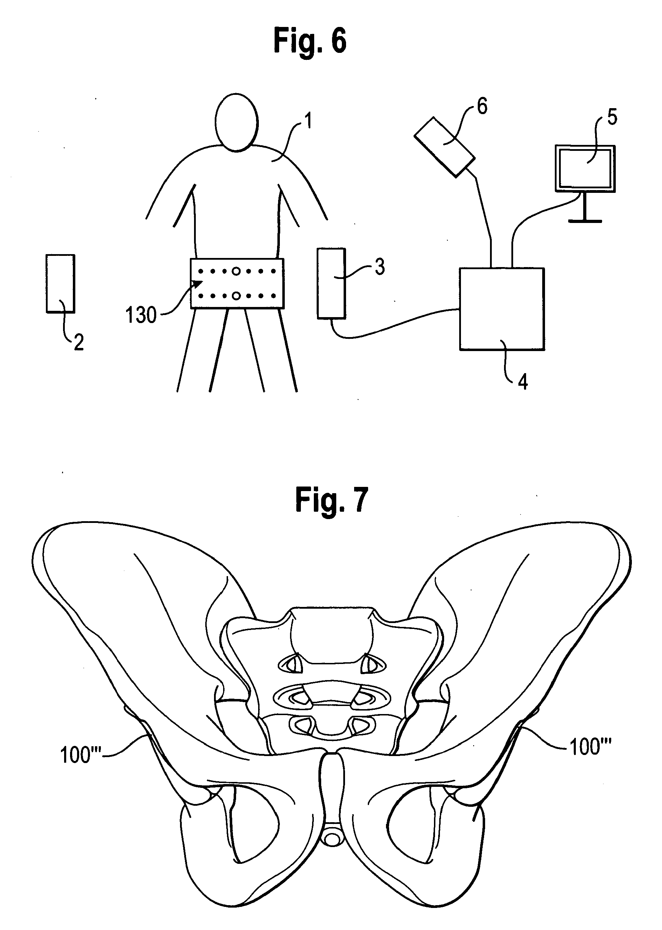

Die Figur 6 zeigt schematisch einen Aufbau (Vorrichtung und Navigationssystem gemäß der Erfindung), wie er für die Bestimmung des Pfannenrandes und bei der Planung oder Durchführung einer Operation verwendet werden kann. Um einen Patienten 1 ist die formveränderliche Markereinrichtung 130 gespannt oder gewunden. Sie befindet sich auf der Höhe des Beckens. Dieses Becken wird von Röntgenlicht einer Röntgenquelle 2 durchstrahlt. Das Röntgenlicht, das die Markereinrichtung und das Becken passiert hat, wird von einem Röntgenlichtdetektor 3 detektiert. Der Patient dreht sich zwischen zwei Röntgenbildaufnahmen um seine Längsachse, um eine Aufnahme aus AP-Richtung und eine schräge Aufnahme zu erzielen. Das Ergebnis der Röntgenlichtdetektion wird von dem Detektor 3 zu einer Datenverarbeitungseinrichtung 4 (z.B. Computer) geleitet. Die Röntgenbildaufnahmen können auf einem Monitor 5 betrachtet werden, der mit dem Computer 4 verbunden ist, auf dem insbesondere ein Programm gemäß der vorliegenden Erfindung läuft oder gespeichert ist. Eine Detektionseinrichtung 6 erlaubt die Detektion von optisch detektierbaren Markern, die beispielsweise an einem Implantat angebracht sind. Optisch detektierbare Marker können auch am Markergürtel angebracht sein. Bevorzugt handelt es sich um optisch detektierbare Marker, die auch in Röntgenaufnahmen detektierbar sind oder sich in einer festen geometrischen Position relativ zu den Röntgenmarkern befinden. Dann kann man während oder zu Beginn der Operation eine für die Navigation erforderliche Patientenregistrierung vornehmen. Vorraussetzung ist allerdings eine zeitnahe Operation nach den Röntgenaufnahmen, da sich der Markergürtel nicht relative zur Anatomie verschieben darf. Findet eine Operation statt, so wird natürlich vorzugsweise die formveränderliche Markereinrichtung 130 (Markergürtel) vorher entfernt.

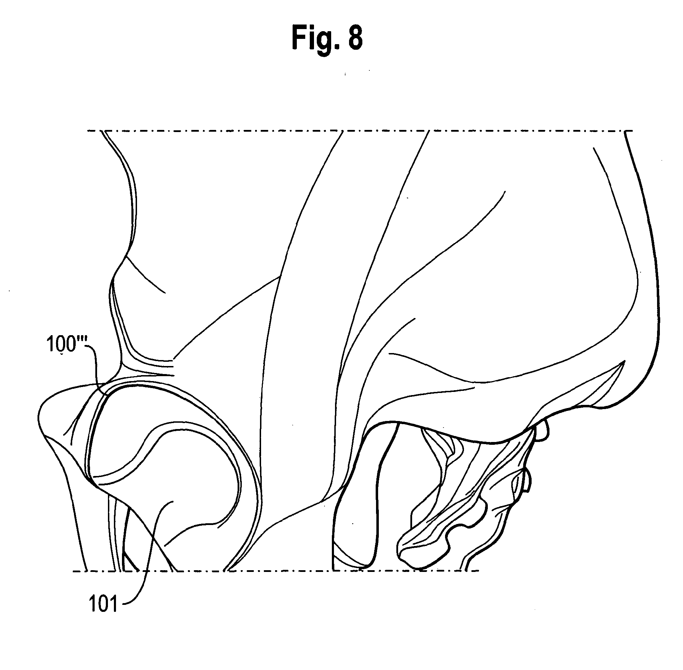

Figur 7 und 8 zeigen Abbildungen eines Beckenmodells, bei denen der Verlauf eines Beckenrandes 100"' gezeigt ist. Figur 7 ist eine Ansicht von vorne und Figur 8 ist eine Seitenansicht des Beckens. Der Verlauf des Randes 100"' wird durch das erfindungsgemäße Verfahren modelliert.

In Figur 8 ist eine Vertiefung 101 zu sehen, die im Innenbereich des Pfannenrandes ausgebildet ist. Über diese Vertiefung kann insbesondere interpoliert werden, um eine Ebene zu bestimmen, die zumindest in etwa auf dem Pfannenrand 100"' aufliegt und ebenfalls als Orientierungsgröße zur Platzierung oder Planung der Platzierung eines Implantats dienen kann.

## Patentansprüche

1. Verfahren zum Bestimmen des dreidimensionalen Verlaufs (100) eines Randes (100"') einer anatomischen Struktur, mit folgenden Schritten:
- mindestens zwei zweidimensionale Abbildungen (Fig. 1a, Fig. 1b) des Randes werden bereitgestellt, wobei die Abbildungen unterschiedliche Ansichten des Randes aus unterschiedlichen Richtungen darstellen und somit unter sich ändernden Abbildungsbedingungen erfolgten;
- in den mindestens zwei Abbildungen wird jeweils ein zweidimensionaler Verlauf (100', 100") des Rands bestimmt;
- basierend auf den Abbildungen und Änderungs-Information über die sich ändernden Abbildungsbedingungen wird ein Modell eines dreidimensionalen Verlaufs des Randes berechnet.

2. Verfahren nach Anspruch 1, bei welchem die Änderungs-Information durch mindestens eine der folgenden, nach den Prinzipien der Epipolargeometrie bestimmten Matrixen ausgedrückt werden: fundamentale Matrix, essentielle Matrix und Lokalisierungsmatrix.

3. Verfahren nach einem der vorhergehenden Ansprüche, bei welchem Korrespondenzpunkte (200', 200") in den Abbildungen (Fig. 2, Fig. 3) bestimmt werden, wobei basierend auf den Korrespondenzpunkten und der Änderungs-Information die dreidimensionale Lage von abgebildeten Punkten und/oder Bereichen bestimmt wird.

4. Verfahren nach einem der vorhergehenden Ansprüche, bei welchem ein Korrespondenzpunkte (200") basierend auf der Bestimmung eines Schnittpunktes zwischen einer Epipolarlinie (E) und dem zweidimensionalen Verlauf (100") des Rands in einer der Abbildungen (Fig. 3) bestimmt wird.

5. Verfahren nach einem der vorhergehenden Ansprüche, bei welchem Korrespondenzpunkte entlang des Verlaufs des Randes bestimmt werden, indem bei der Auswahl eines Korrespondenzpunktes aus Kandidaten für mögliche Korrespondenzpunkte auf die Nachbarschaftsbeziehung zu bereits bestimmten Korrespondenzpunkten zurückgegriffen wird.

6. Verfahren nach einem der vorhergehenden Ansprüche, bei welchem die Abbildungen zusätzlich zu dem abgebildeten Rand abgebildete Landmarken der anatomischen Struktur enthalten und basierend auf den Abbildungen und den Richtungs-Informationen die dreidimensionale Lage der Landmarken, insbesondere relativ zum Verlauf des Randes bestimmt wird.

7. Verfahren nach einem der vorhergehenden Ansprüche, bei welchem die Abbildungen abgebildete Marker (10, 20) enthalten, wobei in den jeweiligen Abbildungen korrespondierende Marker (20a, 10a', 10a") auf Grund ihrer Form und/oder Größe identifiziert werden und basierend auf der Annahme einer für die mindestens zwei zweidimensionalen Abbildungen gleichen räumlichen Beziehung der Marker zu der anatomischen Struktur die Richtungs-Informationen bestimmt werden.

8. Verfahren nach Anspruch 7, bei welchem der Abstand und/oder die relative Lage zumindest zwischen zwei der Marker bekannt ist und hierauf basierend eine Kalibrierung des Modells des Randes erfolgt.

9. Verfahren zum Planen einer Implantation eines Implantats durch simuliertes Ausrichten des Implantats mit folgenden Schritten:
- ein Rand-Modell (100), das ein Modell eines dreidimensionale Verlaufs eines Randes einer Körperstruktur darstellt, wird gemäß einem der vorhergehenden Ansprüche berechnet;
- ein Implantat-Modell (300, 410, 420), das ein Implantat darstellt wird, bereitgestellt;
- eine relative Lage des Implantat-Modells relativ zum Rand-Modell wird bestimmt und kann geändert werden, um eine geeignete Lage oder Soll-Lage des Implantats zu planen.

10. Verfahren nach Anspruch 9, bei welchem die relative Lage des Implantat-Modells und des Rand-Modells und insbesondere die Lage relativ zu zumindest einem Teil der anatomischen Struktur visualisiert wird, um einem Benutzer die Bestimmung einer geeigneten relativen Lage zu ermöglichen.

11. Verfahren nach einem der Ansprüche 9 oder 10, bei welchem Kriterien für die relative Lage des Implantat-Modells relativ zum Rand-Modell vorgegeben werden und basierend auf den Kriterien eine oder mehrere relative Lagen berechnet und vorgeschlagen werden.

12. Verfahren zur Unterstützung der Implantation mit folgenden Schritten:
ein Rand-Modell (100), das ein Modell eines dreidimensionalen Verlaufs der Ränder darstellt, wird gemäß einem der Ansprüche 1 bis 8 bestimmt;
Registrierungs-Daten, die die Lage von Punkten des Randes und/oder von Landmarken in einem Bezugssystem eines Navigationssystems darstellen, werden erfasst;
das Rand-Modell (100) wird basierend auf den Registrierungs-Daten im Bezugssystem registriert;
basierend auf einer bereitgestellten relativen Soll-Lage des Implantats relativ zu dem Rand-Modell wird eine Soll-Lage des Implantats im Bezugssystem berechnet;
Implantat-Daten, die die Lage des Implantats im Bezugssystem bestimmen, werden erfasst;
Informationen über die Soll-Lage des Implantats und über die gegebene Lage des Implantats und/oder über die Abweichung der Lage des Implantats von der Soll-Lage, werden ausgegeben.

13. Programm, das, wenn es auf einem Computer läuft oder in einen Computer geladen wird, das Verfahren nach einem der vorhergehenden Ansprüche ausführt.

14. Computerprogrammspeichermedium, auf dem das Programm nach Anspruch 13 gespeichert ist, oder Signalwelle, die Informationen trägt, die das Programm nach Anspruch 13 darstellen.

15. Vorrichtung mit
einer Detektionseinrichtung (6) zum Detektieren von Markereinrichtungen und/oder Pointern, die verwendet werden, um die Lage eines Implantats und/oder einer anatomischen Struktur zu erfassen;
einem Computer (4), auf dem das Programm nach Anspruch 13 gespeichert ist und/oder läuft, und der ausgebildet ist, Signale von der Detektionseinrichtung (6) mittels des Programms zu verarbeiten.

16. Navigationssystem zum Navigieren eines Implantats und/oder Instruments insbesondere relativ zu einer anatomischen Struktur
mit der Vorrichtung nach Anspruch 15; und
mit einer Anzeigeeinrichtung (5),
wobei die Vorrichtung ausgebildet ist, die Lage des Implantats und die, Lage des Randes der anatomischen Struktur mittels einer Anzeigeeinrichtung darzustellen.
